# EUROPEAN PATENT APPLICATION

(11) **EP 0 785 534 A1**
(43) Date of publication of application: **23.07.1997**
(21) Application number: 96200108.7
(22) Date of filing: 17.01.1996
(51) Int. Cl.: G07F 7/10, H04M 17/00

(54) **Method and system for performing financial transactions by means of mobile telephone sets**

(71) Applicant: Koninklijke PTT Nederland N.V., 2509 CH Den Haag (NL)
(72) Inventor: Feijen, Maurice M., 2593 ED The Hague (NL); Pieterse, Rob, 2111 ZL Aerdenhout (NL); De Lange, Martin Klaas, 2272 NM Voorburg (NL); Pors, Mark Albert, NL-2711 GE Zoetermeer (NL)

(57) **Abstract**

The invention relates to a method and system (1) for performing financial transactions by means of a mobile telephone set (2). To this end, in the mobile terminal (2) a multi-purpose card (3) is inserted having an identification section and a payment section. The (financial) service provider (6) has means (7) for performing a secure transaction with the payment section of the card (3). Thus, a secure end-to-end transaction is provided without the need for the mobile network or the mobile telephone sets to provide data protection.

## Description

### BACKGROUND OF THE INVENTION

The invention relates to a method and system for performing financial transactions by means of a mobile telephone. More in particular, the invention relates to performing payments via a mobile telephone network and to reloading payment cards via the same network.

Electronic methods of performing financial transactions are becoming increasingly popular. In public telephones, so called pre-paid cards are used for payment of the telephone calls. Such cards, also called "chip cards" or "smart cards" normally comprise an electronic integrated circuit capable of storing payment data and, preferably, of also performing data processing, such as cryptographically protecting the payment data. It has been envisaged to use such cards also for other purposes, such as paying for parking meters or paying for services in general. It should be noted that the word "card" will be used in this text as denoting an electronic payment device, such as a card-shaped substrate comprising an electronic circuit for performing electronic payments, but that the actual shape of the device need not always be that of a business or credit card.

Dutch patent application 1000254, published after the priority date of the present text, describes a device for use in combination with a telephone set and a card. The device allows a pre-paid card to be used for performing payments via the telephone by providing an interface between the card and the telephone system. That is, the card is made to communicate with a card-operated system or the like via the telephone. In this way, it is also possible to reload the card via the telephone, i.e. to increase the value of the card.

WO 94/11849 discloses a method for carrying out financial transactions by means of a mobile telephone system, in which the GSM SIM-card is utilized for identifying the user. Payments can be made with this known system but require the user to have an account from which funds are transferred. The GSM SIM-card is used for authorizing a transfer of funds from a user account to a service provider account.

US 5 412 726 discloses a SIM-module for use in a GSM set, the module having prepayment means which can be remotely reloaded. The prepayment means are solely intended for paying usage charges of the mobile system. In order to reload the prepayment means, use is made of keys contained in the mobile set.

US 5 359 182 discloses a wireless telephone debit card system. Credit signals are transmitted via the mobile system, changing the credit amount of the deit card. However, this prior art system provides no data security as the transmitted credit data are not encrypted nor protected in any other way. Thus erroneous credit changes caused by e.g. noisy transmissions, or even fraud, cannot be avoided.

### SUMMARY OF THE INVENTION

The invention seeks to provide a method and system for performing financial transactions by means of mobile telephones, wherein it is possible to use prepaid cards. The invention further seeks to provide such a method and system, in which the advantages of certain mobile systems are utilized to improve the payment process. The invention also seeks to provide such a method and system in which protection of payment data is provided.

A method for performing financial transactions by means of a mobile telephone comprises according to the present invention the steps of inserting a identification card into a mobile terminal, the card being also equipped for performing financial transactions, establishing a communications link with a service provider, the service provider having a security unit capable of performing a secure data exchange with the card,
exchanging financial data between the card and the security unit, and terminating the transaction.

Using a mobile telephone set for card applications offers the advantage of mobility. Using a combined SIM card and payment card makes it possible to use a single device, i.e. a mobile terminal, to provide communication between a card and a card-oriented service provider, thus eliminating the need for an acoustic conversion of payment data. Furthermore, the use of a single card for both user identification to the mobile system and payment offers an added convenience to the user.

### BRIEF DESCRIPTION OF THE DRAWINGS

Fig. 1 shows schematically an embodiment of a system according to the present invention.

Fig. 2 shows schematically a possible protocol used in the system of the present invention.

### EXEMPLARY EMBODIMENTS

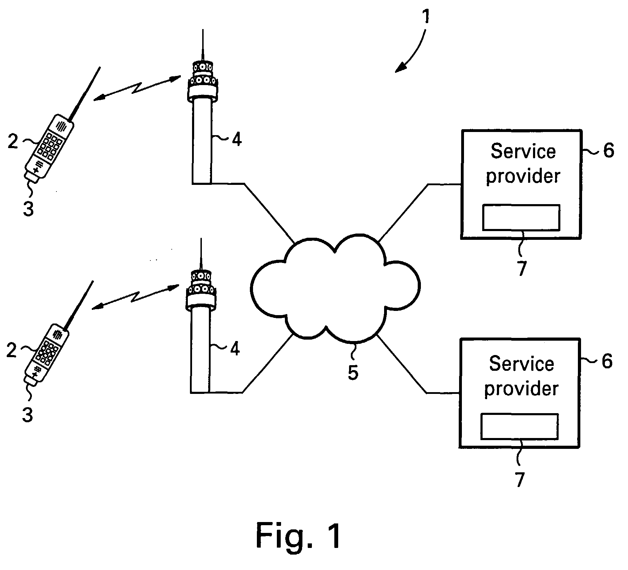

The system 1 shown schematically and by way of example in figure 1 comprises mobile terminals 2 with cards 3. The cards 3 serve as identification cards for identifying the user to the system (SIM-cards in the case of GSM). The mobile terminals 2 communicate via base stations 4 with the network 5. Service providers 6 are connected to the network 5. Each service provider is equipped with a security module 7 comprising means for secured transactions. The service providers may offer various services, such as delivering food, delivering presents to third parties, showing television programs (movies), etc. Financial institutions may also be service providers and may offer financial services, such as increasing the credit amount of the cards 3 via the mobile system. Thus through the cards payment for other services than mobile communications is possible. However, it is also possible to use the cards to pay for the mobile communications, i.e. for mobile telephone calls.

In many prior art systems, it was necessary to transmit an identification code, such as a credit card number, in order to gain access to an account or the like. In the system of the present invention, there is no need to transmit an identification code, such as as PIN. Consequently, there is no security risk involved when using such an identification code. The only data transmitted during a transaction are the data exchanged between a card and the corresponding system. These data are normally protected by data encryption and command identifiers, such as random numbers. Use is thus advantageously made of the security features contained in present day smart cards. The mobile system merely provides a transparent communications link while the card and the corresponding financial unit (security unit) of the service provider enable end-to-end security.

It will be understood that the mobile network may be arranged for GSM, DCS1800, UMTS, or any other mobile system.

A mobile terminal (mobile telephone set) 2 for use in a system as described above comprises a card reader/writer for communicating with a card 3. The reader/writer may comprise a connector for contacting cards having electrical contacts, or electromagnetic means for exchanging data with so-called contact-less cards. As the card itself provides the data protection, it is not necessary for the mobile terminal to have cryptographic means for protecting the (financial) data.

A card for use in a system as described above comprises an integrated circuit (hardware) having a processor and a memory. Suitable software and/or firmware provides multiple functions, such as identification (SIM-function) and payments (financial function). It is of course possible to use multiple cards, e.g. separate identification and financial cards. In such a case the mobile terminal may advantaously be provided with multiple card slots and card readers. However, by having a single card greater user convenience is achieved.

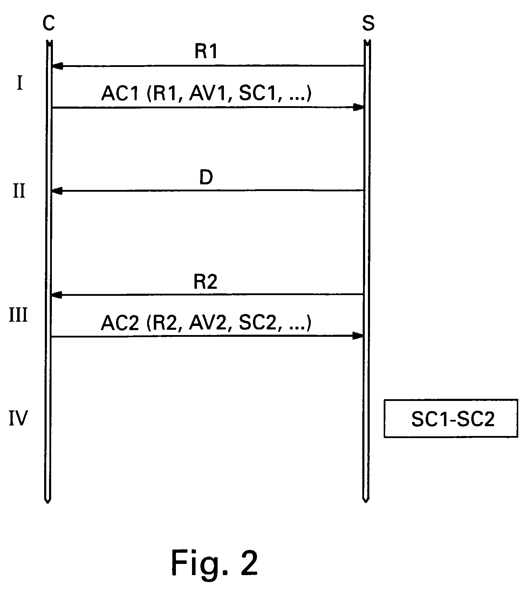

The protocol shown by way of example in Fig. 2 comprises four steps in which data are securely exchanged between the card C (3 in Fig. 1) and the (security unit of the) service provider S (6 and 7 in Fig. 1). Upon initiation of the transaction, in step I the service provider S issues a random number R1, which is transferred (via the mobile network) to the card C. The random number R1 may be part of an authentication request. In respons to receiving the random numbe R1, the card produces a first authentication value AV1, which may also be a random number. The card C produces an authentication code AC1 by cryptographically processing the combination of the random number R1, the value AV1, a card balance SC1, and possibly other parameters. This authentication code AC1 is transmitted to the service provider S, where it is checked.

In step II, the service provider issues a decrease command D in order to effect a payment. The decrease command D comprises the amount the card balance is to be decreased with and may be encrypted. This step may be repeated one or more times.

In step III, the service provider S essentially repeats step I in order to obtain the new card balance. A random number R2 is transmitted to the card C, upon which the card responds with a second authentication value AC2. This value AC2 is produced by cryptographically processing the combination of the random number R2, a second authentication value AV2, the new card balance SC2, and possibly other parameters.

In step IV, the amount paid is checked by substracting the new card balance SC2 from the old card balance SC1.

It will be understood by those skilled in the art that the embodiments described above are given by way of example only and that many modifications and additions are possible without deparing from the scope of the present invention.

## Claims

1. Method for performing financial transactions by means of a mobile telephone, comprising the steps of
- inserting a identification card into a mobile terminal, the card being also equipped for performing financial transactions,
- establishing a communications link with a service provider, the service provider having a security unit capable of performing a secure data exchange with the card,
- exchanging financial data between the card and the security unit, and
- terminating the transaction.

2. Method according to claim 1, wherein the service provider comprises a voice response system giving instructions to the user.

3. Method according to claim 1 or 2, wherein the financial transaction comprises paying for a service provided by the service provider.

4. Method according to claim 1 or 2, wherein the financial transaction comprises increasing a balance of the card.

5. Method according to any of the preceding claims, wherein the mobile telephone is a GSM-set.

6. Method according to any of the preceding claims, wherein the service provided is a mobile telephone call.

7. System for performing financial transactions by means of mobile communications, the system comprising:
- a multi-purpose card having a payment section and a mobile identification section,
- a mobile terminal in which the card is to be inserted,
- a mobile communications network,
- a service terminal capable of communicating with the mobile terminal via the mobile communications network and of accepting payments from a pre-paid card, the service terminal comprising means for performing a secure transaction with the payment section of the card.

8. System according to claim 7, wherein the means for performing a secure transaction with the payment section of the card are arranged in a security module comprising means for encrypting data.

9. System according to claim 7 or 8, wherein the mobile communications network is arranged for GSM.

10. Card for use in a system according to any of claims 7 to 9 inclusive, comprising processing means, memory means, and software means capable of offering a plurality of functions, one of said functions comprising the secure exchange of data.
